# EUROPÄISCHE PATENTSCHRIFT

(11) **EP 0 403 917 B1**
(45) Veröffentlichungstag und Bekanntmachung des Hinweises auf die Patenterteilung: **16.02.1994**
(21) Anmeldenummer: 90111030.4
(22) Anmeldetag: 12.06.1990
(51) Int. Cl.: C09D 17/00, C09B 67/20, C09C 3/10

(54) **Hochkonzentrierte feste Pigmentpräparationen**
Solid pigment preparations of high concentration
Préparations pigmentaires solides très concentrées

(30) Priorität: 21.06.1989 DE 3920251
(43) Veröffentlichungstag der Anmeldung: 27.12.1990
(73) Patentinhaber: BASF Aktiengesellschaft, 67063 Ludwigshafen (DE)
(72) Erfinder: Kurtz, Walter, Dr., D-6702 Bad Duerkheim (DE); Muench, Karl, D-6711 Beindersheim (DE); Kranz, Joachim, Dr., D-6700 Ludwigshafen (DE); Belde, Horst, D-6700 Ludwigshafen (DE)

(56) Entgegenhaltungen:
- EP-A- 0 084 645
- GB-A- 1 603 142

## Beschreibung

Die vorliegende Erfindung betrifft neue feste Pigmentpräparationen, enthaltend 70 bis 97 Gew.-% , bezogen auf das Gesamtgewicht der Präparation, eines oder mehrerer Pigmente sowie 3 bis 30 Gew.-% , bezogen auf das Gesamtgewicht der Präparation, mindestens einen Tensids, das ein Additionsprodukt von Ethylenoxid und gegebenfalls Propylenoxid an Ethylendiamin darstellt, wobei der Anteil an Ethylenoxid 46 bis 100 Gew.-%, bezogen auf das Gesamtgewicht von addiertem Ethylenoxid und Propylenoxid, beträgt und das Additionsprodukt ein mittleres Molekulargewicht von 5000 bis 40000 aufweist.

Aus der EP-A-84 645 sind bereits Pigmentpräparationen bekannt, die, bezogen auf das Gesamtgewicht der Präparation, 70 bis 95 Gew.-% an Pigment und 5 bis 30 Gew.-% mindestens eines oberflächenaktiven festen Mittels, das durch Umsetzen von Ethylendiamin mit Propylenoxid und dann mit Ethylenoxid erhalten wird, wobei der Ethylenoxidanteil, bezogen auf das Blockcopolymere, 30 bis 45 Gew.-% beträgt und das Blockcopolymere ein mittleres Molekulargewicht von 11000 bis 15000 aufweist, enthalten.

Es hat sich jedoch gezeigt, daß solche Pigmentpräparationen noch anwendungstechnische Mängel, insbesondere eine ungenügende Fettechtheit, Lagerstabilität, Blockfestigkeit sowie Lösungsmittelretention, aufweisen.

Aufgabe der vorliegenden Erfindung war es nun, neue hochkonzentrierte feste Pigmentpräparationen bereitzustellen, bei denen die genannten Nachteile nicht mehr auftreten.

Demgemäß wurden die eingangs näher bezeichneten Pigmentpräparationen gefunden.

Als Pigmente, die in den erfindungsgemäßen Präparationen verwendet werden können, kommen anorganische Pigmente, organische Pigmente oder deren Gemische in Betracht, wobei organische Pigmente bevorzugt sind.

Anorganische Pigmente, sind beispielsweise Eisenoxide, Titandioxide, Ruße, Bleichromat-Bleimolybdat-Pigmente, Nickeltitangelb-Pigmente oder Chrom(III)oxid.

Organische Pigmente, sind beispielsweise solche aus der Klasse der Monoazopigmente, z.B. Produkte, die sich von Acetessigarylidderivaten oder von β-Naphtholderivaten ableiten, verlackten Monoazofarbstoffe, z.B. verlackte β-Oxynaphthoesäurefarbstoffe, Disazopigmente, kondensierten Disazopigmente, Isoindolinderivate, Derivate der Naphthalin- oder Perylentetracarbonsäure, Anthrachinonpigmente, Thioindigoderivate, Azomethinderivate, Chinacridone, Perinone, Dioxazine, Pyrazolochinazolone, Ketogruppen enthaltenden polycyclischen Verbindungen mit mindestens 4 kondensierten aromatischen und/oder heteroaromatischen Ringen, Phthalocyaninpigmente oder verlackten basischen Farbstoffe, z.B. verlackte Triarylmethanfarbstoffe.

Beispielhaft seien die anorganischen Pigmente Pigment Yellow 42 (C.I. 77 492), Pigment White 6 (C.I. 77 891), Pigment Red 101 (C.I. 77 491), Pigment Blue 27 (C.I. 77 510), Pigment Blue 29 (C.I. 77 007), oder Pigment Black 7 (C.I. 77 266), sowie die organischen Pigmente Pigment Yellow 1 (C.I. 11 680), Pigment Yellow 3 (C.I. 11 710), Pigment Yellow 12 (C.I. 21 090), Pigment Yellow 13 (C.I. 21 100), Pigment Yellow 14 (C.I. 21 095), Pigment Yellow 16 (C.I. 20 040), Pigment Yellow 17 (C.I. 21 705), Pigment Yellow 34 (C.I. 77 603), Pigment Yellow 42 (C.I. 77 492), Pigment Yellow 74 (C.I. 11 741), Pigment Yellow 83 (C.I. 21 108), Pigment Yellow 106, Pigment Yellow 108 (C.I. 68 240), Pigment Yellow 113, Pigment Yellow 117, Pigment Yellow 126, Pigment Yellow 127, Pigment Yellow 139, Pigment Yellow 185, Pigment Orange 5 (C.I. 12 075), Pigment Orange 13 (C.I. 21 110), Pigment Orange 16 (C.I. 21 160), Pigment Orange 34 (C.I. 21 115), Pigment Orange 36 (C.I. 11 780), Pigment Orange 43 (C.I. 71 105), Pigment Orange 67, Pigment Red 3 (C.I. 12 120), Pigment Red 48:1 (C.I. 15 865:1), Pigment Red 48:4 (15 865:4), Pigment Red 49:1 (C.I. 15630:1), Pigment Red 52:1 (C.I. 15860:1), Pigment Red 53:1 (C.I. 15585:1), Pigment Red 57 (C.I. 15 850), Pigment Red 104 (C.I. 77 605), Pigment Red 112 (C.I. 12 370), Pigment Red 122 (C.I. 73 915), Pigment Red 123 (C.I. 71 145), Pigment Red 146 (C.I. 12 485), Pigment Red 169 (C.I. 45 160:2), Pigment Red 170, Pigment Violet 19 (C.I. 46 500), Pigment Violet 23 (C.I. 51 319), Pigment Violet 27 (C.I. 42 555:3), Pigment Blue 1 (C.I. 42 595 : 2), Pigment Blue 15 : 1 (C.I. 74 160), Pigment Blue 15 : 3 (C.I. 74 160), Pigment Blue 15:6 (C.I. 74 160), Pigment Blue 16 (C.I. 74 100), Pigment Blue 61 (C.I. 42 765:1), Pigment Blue 62, Pigment Green 7 (C.I. 74 260), Pigment Green 8 (C.I. 10 008) oder Pigment Green 36 (C.I. 74 265) genannt.

Besonders hervorzuheben sind soche Pigmentpräparationen, die als anorganische Pigmente Titandioxide oder Ruße enthalten.

Weiterhin besonders hervorzuheben sind solche Pigmentpräparationen, die als organische Pigmente Monoazopigmente, insbesondere solche auf Basis von β-Naphthol oder β-Oxynaphthoesäure, Disazopigmente, insbesondere solche auf Basis von Dichlorbenzidin, wobei Produkte, deren Kupplungskomponente aus der Acetessigester- oder Pyrazolonreihe stammt, ganz besonders zu nennen sind, Isoindolinpigmente, Phthalocyaninpigmente, insbesondere Kupferphthalocyaninpigmente, die gegebenenfalls chloriert sind, oder verlackte Triarylmethanfarbstoffe, insbesondere solche, die mit anorganischen Heteropolysäuren verlackt sind, enthalten.

Bei den Tensiden, die ein weiterer Bestandteil der erfindungsgemäßen Pigmentpräparationen sind, handelt es sich im allgemeinen um an sich bekannte Verbindungen.

Als Tenside sind solche geeignet, die durch Addition von Ethylenoxid und gebebenenfalls Propylenoxid an Ethylendiamin erhalten werden. Das Verhältnis von Ethylenoxid:Proplyenoxid wird dabei so gewählt, daß der Anteil an Ethylenoxid 46 bis 100 Gew.-% , vorzugsweise 60 bis 90 Gew.-% und insbesondere 70 bis 85 Gew.-% jeweils bezogen auf das Gesamtgewicht von addiertem Ethylenoxid und Propylenoxid, beträgt. Dies bedeutet, das der Anteil an Propylenoxid 0 bis 54 Gew.-% vorzugsweise 10 bis 40 Gew.-% und insbesondere 15 bis 30 Gew.-% jeweils bezogen auf das Gesamtgewicht von addiertem Ethylenoxid und Propylenoxid beträgt.

Das mittlere Molekulargewicht der Additionsprodukte beträgt im allgemeinen 5000 bis 40000, vorzugsweise 11000 bis 40000 und insbesondere 15000 bis 35000.

Enthalten die Tenside neben Ethylenoxid auch Propylenoxid, so sind solche bevorzugt, die durch Addition zunächst von Propylenoxid an Ethylendiamin und anschließend von Ethylenoxid erhalten werden.

Wie oben bereits ausgeführt, handelt es sich bei den Tensiden im allgemeinen um an sich bekannte Verbindungen. Sie sind größtenteils handelsüblich oder können nach Methoden, wie sie beispielsweise in J. Falbe, U. Hasserodt "Katalysatoren, Tenside und Mineralöladditive", Seiten 145 bis 147, Georg Thieme Verlag, Stuttgart, 1978, genannt sind, erhalten werden.

In den erfindungsgemäßen Pigmentpräparationen beträgt der Anteil an Pigment 70 bis 97 Gew.-%, vorzugsweise 75 bis 97 Gew.-% und insbesondere 80 bis 95 Gew.-%, jeweils bezogen auf das Gesamtgewicht der Präparation. Der Anteil an Tensid liegt bei 3 bis 30 Gew.-%, vorzugsweise 3 bis 25 Gew.-% und insbesondere 5 bis 20 Gew.-%, jeweils bezogen auf das Gesamtgewicht der Präparation.

Die erfindungsgemäßen Pigmentpräparationen können als weitere Bestandteile noch geringe Mengen an Wasser und weitere in Pigmentzubereitungen übliche Mittel in untergeordneter Menge (im allgemeinen bis zu ca. 5 Gew.-%, bezogen auf das Gesamtgewicht der Präparation) enthalten. In manchen Fällen kann es auch von Vorteil sein, den Anteil dieser Mittel auf Werte oberhalb von 5 Gew.-% zu erhöhen.

Solche Mittel werden beispielsweise bei der Herstellung der Präparationen, z.B. bei der Dispergierung der Pigmente, oder der Isolierung der Präparationen, als Hilfsstoffe angewendet. Als Zusätze für diese Zwecke sind z.B. schaumverhütende Mittel, Aluminiumhydroxid, saure Acrylharze und/oder pH-regulierende Mittel, wie Puffersubstanzen, Säuren oder Basen, z.B. Sulfonsäuren oder Triethanolamin, zu nennen.

Die Herstellung der erfindungsgemäßen Präparation erfolgt vorzugsweise durch Zugabe des Tensids zu einer wässrigen Pigmentsuspension. Dabei kann man im allgemeinen auch solche wäßrigen Pigmentsuspensionen verwenden, wie sie bei der Herstellung der Pigmente anfallen.

Eine weitere bevorzugte Herstellungsweise besteht darin, das Tensid zu dem als Preßkuchen vorliegenden Pigment zu geben, das daran anschließend in einem handelsüblichen Mischer behandelt wird.

Die anschließende Trocknung erfolgt jeweils nach an sich bekannten Methoden, z.B. durch Schranktrocknung oder Sprühtrocknung.

Es ist aber auch möglich, die Präparationen aus fertigem Pigment und Tensid durch Einrühren, Kneten oder Mahlen, z.B. in einer Rührwerkskugelmühle, im Attrittor, in einer Kugelmühle oder einer Sand- oder Perlmühle, in wäßrigen Medium und anschließender Trocknung herzustellen.

Die neuen Präparationen sind zur Pigmentierung von Bindemittelsystemen, z.B. von Acrylatharzen, für die verschiedensten Anwendungen geeignet, beispielsweise zum Färben oder Bedrucken von Papier, Tapeten, Dekorpapieren, Aluminiumfolie, Weich- oder Hart-PVC, Polyethylen, Polypropylen, Leder oder Kunstleder.

Insbesondere eignen sie sich zum Pigmentieren von wäßrigen oder wäßrig-alkoholischen Druck- oder Lackfarben. Geeignete Alkohole sind hierbei z.B. Methanol, Ethanol oder Isopropanol.

Es können aber auch Druckpasten zum Bedrucken von textilen Geweben hergestellt werden.

Die mit den neuen Präparationen pigmentierten Farben können nach dem Tiefdruck-, Flexodruck-, Siebdruck- oder Pigmentdruckverfahren oder nach dem Spritz-, Streich- oder Rakelverfahren aufgebracht werden.

Die folgenden Beispiele sollen die Erfindung weiter erläutern. Die dort angegebenen Prozente sind Gewichtsprozente.

### Beispiele

### Beispiel 1

217,4 g eines 23%igen Preßkuchens (entsprechend 50 g Pigment) von Pigment Yellow 83 (C.I. 21 108) wurden mit 200 ml Wasser aufgerührt und mit 31,2 g einer 25%igen Lösung eines Tensids (erhalten durch Umsetzen von Ethylendiamin mit Propylenoxid und dann mit Ethylenoxid; Ethylenoxid-Gehalt: 80 %, Molekulargewicht: 30000) in Wasser/Isopropanol (3:1 v/v) versetzt. Diese Suspension wurde eine Stunde bei 50°C gerührt, dann abgesaugt und bei 80 bis 90°C getrocknet.

Das dadurch gewonnene Pulver enthält 86,5 % Pigment und ergibt im Flexodruck farbstarke und glänzende Andrucke.

### Beispiel 2

Zu 550 g einer wäßrigen Suspension von Pigment Yellow 13 (C.I. 21 100) (entsprechend 36 g Pigment) wurden 13,5 % (bezogen auf 100 % Pigment) des in Beispiel 1 genannten Tensids gegeben und analog Beispiel 1 aufgearbeitet.

Nach dem Trocknen erhielt man 40 g einer Pigmentpräparation, die hochglänzende und lasierende Andrucke ergibt.

### Beispiel 3

187,3 g eines 26,7%igen Preßkuchen (entsprechend 50 g Pigment) von Pigment Orange 5 (C.I. 12 075) wurden mit 10,4 g einer 75%igen Lösung eines Tensids (wie in Beispiel 1 beschrieben) und 300 ml Wasser eine Stunde bei 60°C gerührt. Diese Suspension wurde dann auf Raumtemperatur abgekühlt, abgesaugt und im Trockenschrank getrocknet.

Mit der dadurch erhaltenen Pigmentpräparation lassen sich wasserverdünnbare Flexo- und Tiefdruckfarben mit hoher Farbstärke, hoher Lasur, hohem Glanz und sehr gutem Fließverhalten herstellen.

### Beispiel 4

Zu einer Suspension von Pigment Red 57 (C.I. 15 850), die durch mehrfaches Dekantieren von Reaktionssalzen befreit wurde, gab man, bezogen auf das Pigment, 15 % eines Tensids (wie in Beispiel 1 beschrieben). Nach einer Rührzeit von einer Stunde bei 60°C und anschließendem Abkühlen auf Raumtemperatur wurde die wäßrige Suspension durch Sprühtrocknung in ein Pulver übergeführt.

Dieses Pulver eignet sich hervorragend für hochwertige Flexo- und Tiefdruckfarben auf Wasserbasis.

### Beispiel 5

Analog Beispiel 4 wurde Pigment Red 48:1 (C.I. 15865:1) aufbereitet. Man erhielt eine Pigmentpräparation, die durch einfaches Einrühren in einen wäßrigen Acrylatlack zu einer Flexo- oder Tiefdruckfarbe verarbeitet werden kann. Die Druckfarbe eignet sich hervorragend zur Herstellung von hochglänzenden Drucken.

### Beispiel 6

Ein 30%iger wäßriger Preßkuchen von Pigment Red 112 (C.I. 12 370) wurde in einem handelsüblichen Mischer mit 13,5 % eines Tensids (wie in Beispiel 1 beschrieben) intensiv vermischt. Nach Schranktrocknung und Mahlung erhielt man eine leichtdispergierbare Pigmentpräparation mit hohem Glanz- und Lasurniveau.

### Beispiel 7

In eine 60°C warme Lösung von 15,6 g eines Tensids (erhalten durch Umsetzen von Ethylendiamin mit Propylenoxid und dann mit Ethylenoxid; Ethylenoxidgehalt: 75 %; Molekulargewicht: ca. 30000) in 200 ml Wasser wurden 100 g feinteiliges Rohkupferphthalocyanin (erhalten durch Mahlen in einer Kugelmühle) zusammen mit 56 g Isobutanol gegeben und unter Rühren 4 Stunden auf 90°C erhitzt. Nach Filtration und Trocknung erhielt man 115,4 g eines β-Kupferphthalocyaninpigments. Die Präparation kann durch Rühren in einem wäßrigen Druckfarbenbindemittel dispergiert werden. Die erhaltenen Drucke zeigen hohen Glanz, Lasur und Farbstärke.

### Beispiel 8

265 g eines feuchten Preßkuchens eines kristallinen β-Kupferphthalocyaninpigments, enthaltend 100 g Pigment, wurden in 600 ml Wasser bei 60°C suspendiert und mit 15,6 g eines Tensids (wie in Beispiel 1 beschrieben) versetzt. Nach Trockung erhielt man 115 g eines β-Kupferphthalocyaninpigments mit hervorragenden Eigenschaften in wäßrigen Flexo- und Tiefdruckfarben.

### Beispiel 9

140 g eines feuchten Preßkuchens eines Kupferphthalocyaninpigments der α-Modifikation (entsprechend 50 g Pigment) wurden in 200 ml Wasser suspendiert und bei 60°C mit 10,25 g eines Tensids (erhalten durch Umsetzen von Ethylendiamin mit Propylenoxid und dann mit Ethylenoxid; Ethylenoxidgehalt: 70 %; Molekulargewicht: ca. 25000) vermischt und 2 Stunden gerührt. Nach Filtration und Trocknung erhielt man 60 g eines Kupferphthalocyaninpigments der α-Modifikation, das in wäßrigen Druckfarben hervorragende Glanz- und Lasurwerte ergibt.

### Beispiel 10

100 g feuchtes Preßgut von Pigment Green 7 (C.I. 74 260), entsprechend 50 g Pigment, wurden in 160 ml Wasser bei 60°C verrührt und mit 7,5 g eines Tensids (wie in Beispiel 1 beschrieben) bei 90°C 2 Stunden homogensisiert. Nach Sprühtrocknung erhielt man 57 g eines Kupferphthalocyaninpigments mit hervorragender Dispergierbarkeit und Farbstärke in wäßrigen Druckfarben.

## Patentansprüche

1. Feste Pigmentpräparationen, enthaltend 70 bis 97 Gew.-%, bezogen auf das Gesamtgewicht der Präparation, eines oder mehrerer Pigmente sowie 3 bis 30 Gew.-%, bezogen auf das Gesamtgewicht der Präparation, mindestens eines Tensids, das ein Additionsprodukt von Ethylenoxid und gegebenenfalls Propylenoxid an Ethylendiamin darstellt und ein mittleres Molekulargewicht von 5000 bis 40000 aufweist, dadurch gekennzeichnet, daß der Anteil an Ethylenoxid 46 bis 100 Gew.-%, bezogen auf das Gesamtgewicht von addiertem Ethylenoxid und Propylenoxid, beträgt.

2. Feste Pigmentpräparationen nach Anspruch 1, dadurch gekennzeichnet, daß sie 75 bis 97 Gew.-%, bezogen auf das Gesamtgewicht der Präparation, eines oder mehrerer Pigmente sowie 3 bis 25 Gew.-%, bezogen auf das Gesamtgewicht der Präparation, mindestens eines Tensids enthalten.

3. Feste Pigmentpräparationen nach Anspruch 1, dadurch gekennzeichnet, daß sie als Tensid ein Additonsprodukt von Ethylenoxid und Propylenoxid an Ethylendiamin enthalten, wobei der Anteil an Ethylenoxid 60 bis 90 Gew.-%, bezogen auf das Gesamtgewicht von addiertem Ethylenoxid und Propylenoxid, beträgt.

4. Feste Pigmentpräparationen nach Anspruch 1, dadurch gekennzeichnet, daß sie ein Tensid enthalten, das ein mittleres Molekulargewicht von 11000 bis 40000 aufweist.

5. Feste Pigmentpräparationen nach Anspruch 1, dadurch gekennzeichnet, daß sie als Pigmente anorganische Pigmente, organische Pigmente oder deren Gemische enthalten.

6. Feste Pigmentpräparationen nach Anspruch 1, dadurch gekennzeichnet, daß sie als anorganische Pigmente Eisenoxide, Titandioxide, Ruße, Bleichromat-Bleimolybdat-Pigmente, Nickeltitangelb-Pigmente oder Chrom(III)oxid enthalten.

7. Feste Pigmentpräparationen nach Anspruch 1, dadurch gekennzeichnet, daß sie als organische Pigmente solche aus der Klasse der Monoazopigmente, verlackten Monoazofarbstoffe, Disazopigmente, kondensierten Disazopigmente, Isoindolinderivate, Derivate der Naphthalin- oder Perylentetracarbonsäure, Anthrachinonpigmente, Thioindigoderivate, Azomethinderivate, Chinacridone, Perinone, Dioxazine, Pyrazolochinazolone, Ketogruppen enthaltenden polycyclischen Verbindungen mit mindestens 4 kondensierten aromatischen und/oder heteroaromatischen Ringen, Phthalocyaninpigmente oder verlackten basischen Farbstoffe enthalten.

8. Verwendung der festen Pigmentpräparationen gemäß Anspruch 1 zum Pigmentieren von wäßrigen oder wäßrig-alkoholischen Druck- oder Lackfarben.

## Claims

1. A solid pigment formulation containing from 70 to 97 % by weight, based on the total weight of the formulation, of one or more pigments and also from 3 to 30 % by weight, based on the total weight of the formulation, of at least one surfactant which is an adduct of ethylene oxide and optionally propylene oxide with ethylenediamine and has an average molecular weight of from 5000 to 40,000, wherein the proportion of ethylene oxide is from 46 to 100 % by weight, based on the total weight of ethylene oxide and propylene oxide in the adduct.

2. A solid pigment formulation as claimed in claim 1, containing from 75 to 97 % by weight, based on the total weight of the formulation, of one or more pigments and also from 3 to 25 % by weight, based on the total weight of the formulation, of at least one surfactant.

3. A solid pigment formulation as claimed in claim 1, wherein the surfactant is an adduct of ethylene oxide and propylene oxide with ethylenediamine in which the proportion of ethylene oxide is from 60 to 90 % by weight, based on the total weight of ethylene oxide and propylene oxide in the adduct.

4. A solid pigment formulation as claimed in claim 1, wherein the surfactant has an average molecular weight of from 11,000 to 40,000.

5. A solid pigment formulation as claimed in claim 1, wherein the pigments are inorganic pigments, organic pigments or mixtures thereof.

6. A solid pigment formulation as claimed in claim 1, containing as inorganic pigments iron oxides, titanium dioxides, carbon blacks, lead chromate/lead molybdate pigments, nickel titanium yellow pigments or chromium(III) oxide.

7. A solid pigment formulation as claimed in claim 1, containing as organic pigments those of the class of the monoazo pigments, laked monoazo dyes, disazo pigments, fused disazo pigments, isoindoline derivatives, derivatives of naphthalene- or perylene-tetracarboxylic acid, anthraquinone pigments, thioindigo derivatives, azomethine derivatives, quinacridones, perinones, dioxazines, pyrazoloquinazolones, keto-containing polycyclic compounds having at least 4 fused aromatic and/or heteroaromatic rings, phthalocyanine pigments or laked basic dyes.

8. The use of a solid pigment formulation as claimed in claim 1 for pigmenting aqueous or aqueous-alcoholic printing ink or gloss paint compositions.

## Revendications

1. Préparations de pigments solides, contenant de 70 à 97% en poids par rapport au poids total de la préparation d'un ou plusieurs pigments ainsi que de 3 à 30% en poids par rapport au poids total de la préparation d'au moins un agent tensio-actif qui représente un produit d'addition d'oxyde d'éthylène et éventuellement d'oxyde de propylène Sur l'éthylènediamine et qui présente un poids moléculaire moyen de 5 000 à 40 000, caractérisées en ce que la quantité d'oxyde d'éthylène est de 46 à 100% en poids par rapport au poids total de l'oxyde d'éthylène et de l'oxyde de propylène ajoutés.

2. Préparations de pigments solides selon la revendication 1, caractérisées en ce qu'elles contiennent de 75 à 97% en poids, par rapport au poids total de la préparation, d'un ou plusieurs pigments ainsi que 3 à 25% en poids, par rapport au poids total de la préparation, d'au moins un agent tensio-actif.

3. Préparations de pigments solides selon la revendication 1, caractérisées en ce qu'elles contiennent comme agent tensio-actif un produit d'addition d'oxyde d'éthylène et d'oxyde de propylène sur l'éthylènediamine, la quantité d'oxyde d'éthylène étant de 60 à 90% en poids, par rapport au poids total de l'oxyde d'éthylène et de l'oxyde de propylène ajoutés.

4. Préparations de pigments solides selon la revendication 1, caractérisées en ce qu'elles contiennent un agent tensio-actif qui présente un poids moléculaire moyen de 11 000 à 40 000.

5. Préparations de pigments solides selon la revendication 1, caractérisées en ce qu'elles contiennent comme pigments des pigments inorganiques, des pigments organiques ou leurs mélanges.

6. Préparations de pigments solides selon la revendication 1, caractérisées en ce qu'elles contiennent comme pigments inorganiques, de l'oxyde de fer, du dioxyde de titane, du noir de fumée, des pigments chromate de plomb/molybdate de plomb, des pigments jaunes de nickel et de titane ou de l'oxyde de chrome(III).

7. Préparations de pigments solides selon la revendication 1, caractérisées en ce qu'elles contiennent comme pigments organiques ceux de la famille des pigments monoazoïques, des colorants monoazoïques sous forme de pigments, des pigments disazoïques, des pigments disazoïques condensés, des dérivés d'isoindoline, des dérivés d'acide napbtalène- ou pérylènetétracarboxylique, des pigments anthraquinoniques, des dérivés de thio-indigo, des dérivés d'azométhine, de la quinacridone, de la périnone, de la dioxazine, de la pyrazoloquinazolone, des composés polycycliques contenant des groupements cétoniques avec au moins 4 noyaux aromatiques et/ou hétéroaromatiques condensés, des pigments de phtalocyanine ou des colorants basiques transformés en pigments.

8. Utilisation des préparations de pigments solides selon la revendication 1 pour la pigmentation d'encres d'imprimerie ou de laques aqueuses ou hydro-alcooliques.
